# EUROPEAN PATENT APPLICATION

(11) **EP 0 908 480 A1**
(43) Date of publication of application: **14.04.1999**
(21) Application number: 98118581.2
(22) Date of filing: 01.10.1998
(51) Int. Cl.: C08G 18/40, C08J 9/14

(54) **Blister-free rigid foam panels faced with a gas-impermeable material and a process for their production**

(30) Priority: 09.10.1997 US 948166
(71) Applicant: Bayer Corporation, Pittsburgh, PA 15205-9741 (US)
(72) Inventor: Rossitto, Frank C., Pittsburgh, PA 15243 (US); Pigott, Susan C., Clinton, PA 15026 (US)
(74) Representative: Pettrich, Klaus-Günter

(57) **Abstract**

A rigid foam-forming mixture that includes diphenylmethane diisocyanate (MDI) or polymeric diphenyl-methane diisocyanate (PMDI), a polyol mixture and 1,1-dichloro-1-fluoroethane is applied to a gas impermeable surface. The polyol mixture is made up of from about 10 to about 40% by weight (based on the total weight of the polyol mixture) of a polyether polyol having a functionality of from about 4.5 to about 6.2 and an OH number of from about 340 to about 510 and at least 50% by weight (based on the total weight of the polyol mixture) of a polyester polyol having a functionality of from about 1.8 to about 2.4 and an OH number of from about 220 to about 350.

## Description

### BACKGROUND OF THE INVENTION

The present invention relates to rigid foam panels faced with a gas-impermeable material and to a process for their production.

Rigid foam panels faced with gas-impermeable materials have a number of uses in the construction and appliance industries. Such panels may be used, for example, in insulated garage doors, architectural panels, window frames, and refrigerator cabinets.

These panels are generally produced by applying a liquid, foam-forming mixture to a panel or sheet made of a gas-impermeable material or by injecting a liquid, foam-forming mixture between panels of gas-impermeable material(s) and then allowing the foam to form and cure. The foam-forming mixtures applied to the gas impermeable panel or panels in this manner include a blowing agent. One of the more commonly used blowing agents in such mixtures is 1,1-dichloro-1-fluoroethane (also known as "HCFC-141b").

HCFC-141b is among the preferred blowing agents for these types of foams because it has a low ozone depletion potential and produces foams with good thermal insulating properties. It has been found, however, that rigid foam systems containing both polyethers and polyesters which are blown with HCFC-141b have a tendency to blister when applied to a gas impermeable surface. This blistering reduces the thermal conductivity value of the resultant foam panels and may result in poor adhesion or even delamination.

### SUMMARY OF THE INVENTION

It is therefore an object of the present invention to provide substantially blister-free, rigid foam panels faced with a gas-impermeable material which have been blown with 1,1-dichloro-1-fluoroethane.

It is also an object of the present invention to provide a foam-forming mixture in which 1,1-dichloro-1-fluoroethane is used as the blowing agent that will adhere to a gas-impermeable surface without blistering.

It is another object of the present invention to provide a process for making substantially blister-free rigid foam panels faced with a gas-impermeable material in which 1,1-dichloro-1-fluoroethane is used as the blowing agent in the foam-forming mixture.

It is a further object of the present invention to provide substantially blister-free, rigid foam panels faced with a gas-impermeable material having good thermal insulation characteristics in which the rigid foam was blown with 1,1-dichloro-1-fluoroethane.

These and other objects which will be apparent to those skilled in the art are accomplished by applying a rigid foam-forming mixture that includes diphenylmethane diisocyanate (MDI) or polymeric diphenylmethane diisocyanate (PMDI), a polyol mixture and 1,1-dichloro-1-fluoroethane to a gas impermeable surface. The polyol mixture is made up of from about 10 to about 40% by weight (based on the total weight of the polyol mixture) of a polyether polyol having a functionality of from about 4.5 to about 6.2 and an OH number of from about 340 to about 510 and at least 50% by weight (based on the total weight of the polyol mixture) of a polyester polyol having a functionality of from about 1.8 to about 2.4 and an OH number of from about 220 to about 350.

### DETAILED DESCRIPTION OF THE INVENTION

The present invention relates to foam-forming mixtures in which the blowing agent is 1,1-dichloro-1-fluoroethane. These foam-forming mixtures can be applied to a gas-impermeable surface and foamed without blistering. The present invention also relates to a process for the production of substantially blister free, rigid foam panels faced with a gas impermeable material and to the panels produced by this process.

Any material which is impermeable to gas may be used as the facing material for the panels of the present invention. Examples of suitable gas-impermeable materials include steel, aluminum, vinyl, and polyesters. This gas-impermeable material may be in any form (e.g., sheets or panels).

The foam-forming mixture which is applied to the gas-impermeable material in accordance with the present invention must include a polyisocyanate, a polyol mixture and 1,1-dichloro-1-fluoroethane as the blowing agent.

Polyisocyanates suitable for use in the foam-forming mixtures of the present invention include diphenylmethane diisocyanate, polymeric diphenylmethane diisocyanate, diphenylmethane diisocyanate-based prepolymers, polymeric diphenylmethane diisocyanate-based prepolymers, modified diphenylmethane diisocyanates, modified polymeric diphenylmethane diisocyanates and mixtures of such polyisocyanates. Suitable modified diphenylmethane diisocyanates and modified polymeric diphenylmethane diisocyanates include diphenylmethane diisocyanates and polymeric diphenylmethane diisocyanates containing ester, urea, biuret, allophanate, carbodiimide, isocyanurate and/or urethane group(s) due to partial chemical reaction of isocyanate groups.

The polyol mixture used in the practice of the present invention must include at least one polyether polyol and at least one polyester polyol. The required polyether polyols useful in the foam-forming mixtures of the present invention have a functionality of from about 4.5 to about 6.2, preferably from about 5.2 to about 5.8 and an OH number of from about 340 to about 510, preferably from about 380 to about 470. Any of the known, commercially available polyether polyols satistying these criteria may be used in the practice of the present invention. These polyether polyols must be present in an amount such that they represent from about 10 to about 40% by weight of the total weight of the polyol mixture, preferably from about 10 to about 30 % by weight, most preferably from about 10 to about 20 % by weight.

Sucrose-based polyether polyols are particularly preferred polyether polyols for rigid foams of the type produced in accordance the present invention. It has been found, however, that sucrose-based polyether polyols, particularly those having internal ethylene oxide units, have an increased tendency to cause blistering in panels of the type produced in accordance with the present invention. This tendency seems to increase as the amount of internal ethylene oxide units increases. It is therefore advantageous to limit the amount of polyether polyols having internal ethylene oxide units which are present in the polyol mixture to from about 10 to about 30% by weight of the total polyol mixture, preferably from about 5 to about 20% by weight of the total polyol mixture.

The required polyester polyols useful in the practice of the present invention have a functionality of from about 1.8 to about 2.4, preferably from about 1.9 to about 2.2, most preferably from about 1.9 to about 2.1 and an OH number of from about 220 to about 350, preferably from about 230 to about 270, most preferably from about 230 to about 250. Any of the commercially available polyester polyols satisfying these criteria may be used in the foam-forming mixtures of the present invention. These polyester polyols must be used in an amount such that they constitute at least 50% by weight of the total polyol mixture, preferably from about 50 to about 90% by weight, and most preferably from about 60 to about 80% by weight.

Examples of preferred polyester polyols include the aromatic polyester polyols which are commercially available from Stepan under the names Stepanpol PS-2502A and PS-2352 and those available from Hoechst Celanese under the names Terate 203 and Terate 2541.

Other known and commercially available polyols may optionally be included in the polyol mixture used in the practice of the present invention, provided that these optional polyols are used in amounts such that they will not exceed 40% by weight of the total weight of the polyol mixture. Examples of suitable optional polyols include: polyether polyols which do not satisfy the functionality and/or OH number requirements of the required polyether polyol(s) and polyester polyols which do not satisfy the functionality and/or OH number requirements of the required polyester polyol(s).

1,1-dichloro-1-fluoroethane must be used as the blowing agent for the foams produced in accordance with the present invention. However, other blowing agents may also optionally be used. Examples of suitable optional blowing agents include: water; 1,1,1,4,4,4-hexafluorobutane (HFC-356); the tetrafluoroethanes such as 1,1,1,2-tetrafluoroethane (HFC-134a); the pentafluoropropanes such as 1,1,2,2,3-pentafluoropropane (HFC-245ca), 1,1,2,3,3-pentafluoropropane (HFC-245ea), 1,1,1,2,3-pentafluoropropane (HFC-245eb), and 1,1,1,3,3-pentafluoropropane (HFC-245fa); the hexafluoropropanes such as 1,1,2,2,3,3-hexafluoropropane (HFC-236ca), 1,1,1,2,2,3-hexafluoropropane (HFC-236cb), 1,1,1,2,3,3-hexafluoropropane (HFC-236ea) 1,1,1,3,3,3-hexafluoropropane (HFC-236fa); the pentafluorobutanes such as 1,1,1,3,3-pentafluorobutane (HFC-365); and difluoroethanes such as 1,1-difluoroethane (HFC-152a).

1,1-dichloro-1-fluoroethane is generally used in an amount of from about 15 to about 25% by weight (based on the total weight of the polyol mixture, including any processing aids, catalysts, etc.("B-side")), preferably from about 18 to about 28% by weight. The optional blowing agent or agents may be used in amounts of from about 15 to about 25% by weight (based on the total weight of the "B-side" of the foam formulation).

Other materials which may optionally be included in the foam-forming mixtures of the present invention include any of the known catalysts, surfactants, antistatic agents, fillers and flame retardants.

In the foam-forming mixtures of the present invention, the isocyanate and polyol mixture are generally used in amounts such that the equivalent ratio of isocyanate groups to hydroxyl groups will be greater than 1:1, preferably from about 1.55:1 to about 2:1.

The foam-forming mixtures of the present invention may be applied to the gas-impermeable substrate by any of the methods known to those skilled in the art. Examples of suitable methods include spraying and pouring (either in a single stream or in multiple streams).

The rigid-foam panels of the present invention are characterized by the lack of blisters, a reduced tendency toward delamination, improved adhesion to the substrate, and improved long term insulation values.

The rigid foam panels produced in accordance with the present invention are particularly useful for garage doors and architectural building panels.

Having thus described our invention, the following Examples are given as being illustrative thereof. All parts and percentages given in these Examples are parts by weight and percentages by weight, unless otherwise indicated.

### EXAMPLES

The materials used in the Examples were as follows:
- POLYETHER A:: A sucrose-initiated polyether polyol formed by reacting sucrose, propylene oxide and water first with ethylene oxide and then propylene oxide [EO:PO=30:70] in the presence of a pH-basic catalyst and subsequently neutralizing the reaction mixture with lactic acid. OH Number = 470; functionality = 5.2.
- POLYETHER B:: A sucrose-initiated polyether polyol formed by reacting sucrose with propylene oxide. OH Number = 380; functionality = 5.81.
- POLYETHER C:: A sucrose-initiated polyether polyol formed by reacting sucrose with propylene oxide. OH Number = 470; functionality = 5.24.
- POLYESTER A:: An aromatic polyester polyol having an OH Number of 240 and a functionality of 2.0 which is commercially available from Stepan under the name Stepanpol PS-2502A.
- POLYESTER B:: An aromatic polyester polyol having an OH Number of 240 and a functionality of 2.0 which is commercially available from Stepan under the name Stepanpol PS-2352.
- POLYESTER C:: An aromatic polyester polyol having an OH Number of 320 and a functionality of 2.3 which is commercially available from Hoechst Celanese under the name Terate 203.
- POLYESTER D:: An aromatic polyester polyol having an OH Number of 245 and a functionality of 2.0 which is commercially available from Hoechst Celanese under the name Terate 2541.
- POLYISOCYANATE:: A polymeric diphenylmethane diisocyanate having an NCO content of 31.5 % by weight which is commercially available from Bayer Corporation under the name Mondur MR.
- HCFC-141b:: 1,1-dichloro-1-fluoroethane.

The following procedure was used in each of the Examples below:

The foam-forming mixture was prepared by combining POLYISOCYANATE and a polyol mixture formed from one polyether polyol and one polyester polyol in amounts such that the equivalent ratio of isocyanate groups to total equivalents of hydroxyl groups was the Isocyanate Index reported in the Table. The polyol mixture used in each Example was made up of one polyester polyol and one polyether polyol which were present in that mixture in the % by weight indicated in the Table. HCFC-141b was included in each foam-forming mixture in an amount of 19.6% by weight (based on the total weight of the "B-side" of the foam-forming formulation (out of 100%)). The foam-forming mixture was then poured onto a sheet of aluminum foil. The panels were then molded on a laboratory press at 120°C for 2 minutes and placed in an oven at 100°C for 30 minutes. If blisters appeared, the panels were removed from the oven. If no blisters appeared, the panels were left in the oven for 24 hours and then re-inspected.

**TABLE**

| Ex. | Polyether | Wt. % Polyether | Polyester | Wt.% Polyester | NCO Index | Blister After 30 min. | Blister After 24 hr. |
|---|---|---|---|---|---|---|---|
| 1* | A | 60 | A | 40 | 2.0 | YES | YES |
| 2* | A | 60 | A | 40 | 1.85 | YES | YES |
| 3* | A | 60 | A | 40 | 1.65 | YES | YES |
| 4* | A | 60 | A | 40 | 1.55 | YES | YES |
| 5 | A | 20 | A | 80 | 2.0 | NO | NO |
| 6 | B | 20 | A | 80 | 2.0 | NO | NO |
| 7 | B | 30 | A | 70 | 2.0 | NO | NO |
| 8* | B | 40 | A | 60 | 2.0 | YES | YES |
| 9 | C | 20 | A | 80 | 2.0 | NO | NO |
| 10 | D | 20 | A | 80 | 2.0 | NO | NO |
| 11 | B | 30 | A | 70 | 2.0 | NO | NO |
| 12 | B | 40 | A | 60 | 2.0 | NO | NO |
| 13 | C | 40 | A | 60 | 2.0 | NO | NO |
| 14* | C | 50 | A | 50 | 2.0 | YES | YES |

| | | | | | | | |
|---|---|---|---|---|---|---|---|
| *COMPARATIVE EXAMPLE | | | | | | | |

It can be seen from Comparative Examples 1-4, 8 and 14 that blistering occurred whenever the polyether polyol was present in the polyol mixture in a- amount greater than 40% by weight. This blistering occurs regardless of the NCO Index and the particular polyether polyol used.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for producing substantially blister-free rigid foam panels faced with a gas-impermeable material comprising applying a foam-forming mixture containing
a) a polyisocyanate selected from the group consisting of diphenylmethane diisocyanate, polymeric diphenylmethane diisocyanate, prepolymers of diphenylmethane diisocyanate, prepolymers of polymeric diphenylmethane-diisocyanate, modified diphenylmethane diisocyanates, modified polymeric diphenylmethane diisocyanates and mixtures thereof,
b) a polyol mixture which includes:
1) from about 10 to about 40% by weight, based on the total weight of polyol mixture, of a polyether polyol having a hydroxyl group functionality of from about 4.5 to about 6.2 and an OH number of from about 340 to about 510, and
2) at least 50% by weight, based on the total weight of polyol mixture, of a polyester polyol having a functionality of from about 1.8 to about 2.4 and an OH number of from about 220 to about 350, and
c) 1,1-dichloro-1-fluoroethane to a gas-impermeable material.

2. The process of Claim 1 in which the polyether polyol is a sucrose-based polyether polyol having a functionality of at least 5.

3. The process of Claim 2 in which the polyether polyol contains internal ethylene oxide groups.

4. The process of Claim 3 in which the polyol mixture contains no more than 30% by weight polyether polyol.

5. The process of Claim 3 in which the polyester polyol is an aromatic polyester polyol having a functionality of about 2.

6. The process of Claim 2 in which the polyester polyol is an aromatic polyester polyol having a functionality of about 2.

7. The process of Claim 1 in which the polyester polyol is an aromatic polyester polyol having a functionality of about 2.

8. The process of Claim 1 in which the polyisocyanate is polymeric diphenylmethane diisocyanate.

9. The process of Claim 1 in which the gas-impermeable material is selected from the group consisting of steel, aluminum, vinyl, polyester, and combinations thereof.

10. A blister-free, rigid foam panel faced with a gas-impermeable material produced by the process of Claim 1.

11. A blister-free, rigid foam panel faced with a gas-impermeable material produced by the process of Claim 2.
